# FASCICULE DE BREVET EUROPEEN

(11) **EP 0 953 419 B1**
(45) Date de publication et mention de la délivrance du brevet: **25.10.2006**
(21) Numéro de dépôt: 99401014.8
(22) Date de dépôt: 26.04.1999
(51) Int. Cl.: B29C 37/00, B29C 45/16

(54) **Procédé de dispositif pour la fabrication de pièces peintes ou vernies en matière plastique moulée**
Verfahren und Vorrichtung zum Herstellen von gefärbten oder lackierten geformten Kunststoffgegenständen
Method and apparatus for producing painted or lacquered moulded plastic articles

(30) Priorité: 29.04.1998 FR 9805378
(43) Date de publication de la demande: 03.11.1999
(73) Titulaire: L'ORÉAL, 75008 Paris (FR)
(72) Inventeur: Bethune, Alain, 91600 Savigny (FR)
(74) Mandataire: Leszczynski, André

(56) Documents cités:
- WO-A-95/13177
- DE-A- 2 461 925
- DE-A- 4 238 130
- DE-A- 19 534 982
- FR-A- 2 729 886
- US-A- 4 207 049
- US-A- 5 030 406
- PATENT ABSTRACTS OF JAPAN vol. 007, no. 269 (M-259), 30 novembre 1983 (1983-11-30) & JP 58 148728 A (MATSUSHITA DENKO KK), 3 septembre 1983 (1983-09-03)
- GRAFF G: "IN-MOLD COLOR COATING READIES FOR INDUSTRY DEBUT" MODERN PLASTICS INTERNATIONAL, MCGRAW-HILL,INC. LAUSANNE, CH, vol. 25, no. 2, 1 février 1995 (1995-02-01), pages 52-53, XP000517930 ISSN: 0026-8283
- PATENT ABSTRACTS OF JAPAN vol. 012, no. 442 (M-766), 21 novembre 1988 (1988-11-21) & JP 63 173616 A (SUZUKI MOTOR CO LTD), 18 juillet 1988 (1988-07-18)
- DATABASE WPI Section Ch, Week 199402, Derwent Publications Ltd., London, GB; Class A13, AN 1994-011669 -& JP 5 318 527 A (ASAHI CHEM IND CO LTD) 03 Décembre 1993

## Description

La présente invention concerne la fabrication de pièces par moulage de matière thermoplastique, et plus particulièrement mais non exclusivement, la fabrication de pièces ayant un aspect de surface nacré ou métallique.

Pour conférer à des pièces en matière plastique moulée un aspect nacré, il est connu d'incorporer à la matière plastique une charge appropriée.

Toutefois, les lignes de flux de matière durant le moulage demeurent le plus souvent visibles sur la pièce ainsi produite, ce qui nuit à son esthétique.

De plus, la présence de la charge peut entraîner des problèmes de fragilité de la pièce.

Par ailleurs, pour conférer aux pièces en matière plastique moulée un aspect métallique, il est connu de les métalliser sous vide ou de les immerger dans un bain électrolytique, mais de telles techniques sont relativement coûteuses à mettre en oeuvre.

Il est encore connu de peindre les pièces en matière plastique en pulvérisant sur ces dernières une peinture ou un vernis, mais cela reste une solution relativement coûteuse et peut poser en outre des problèmes d'environnement.

On connaît par WO 95/13177 un procédé dans lequel on injecte dans un premier temps la matière plastique dans une cavité de moule, puis on déplace les parties constitutives du moule l'une par rapport à l'autre afin de ménager un espace permettant d'injecter la peinture. Ce procédé nécessite un moule relativement compliqué car le déplacement des parties constitutives du moule doit être contrôlé avec précision avant l'injection de la peinture.

On connaît encore par FR-A-2729886 un procédé dans lequel on injecte dans un premier temps la matière plastique, puis avant que le coeur de la pièce ne soit entièrement refroidi, on injecte la peinture. La pièce moulée est peinte sans ouverture du moule. Le coeur de la pièce, encore fluide, est compressible et permet à la peinture qui est injectée sous pression de se répartir autour de la pièce. Ce procédé est relativement difficile à mettre en oeuvre, car la capacité de compression de la matière plastique dépend de l'épaisseur de la couche non solidifiée au coeur de la pièce. La géométrie de la pièce doit être prévue en conséquence, ce qui complique sa conception.

Le brevet DE 195 34 982 décrit un procédé de moulage comportant les étapes consistant, dans un premier temps, à injecter une matière plastique et, dans un deuxième temps, ménager un espace plus grand dans la cavité de moulage afin d'injecter un revêtement.

Le brevet US 5 030 406 décrit un moule comportant des ensembles de cavités servant respectivement au moulage et au surmoulage, ces cavités présentant des cavités de géométries différentes.

Le brevet JP 05 318 527 décrit un procédé consistant à injecter une résine thermoplastique dans une cavité de moule, puis une résine thermodurcissable dans cette même cavité.

La présente invention vise notamment à faciliter la fabrication de pièces en matière plastique ayant un aspect de surface particulier, nacré ou métallique par exemple.

Elle y parvient grâce à un nouveau procédé pour réaliser une pièce peinte ou vernie en matière thermoplastique moulée, caractérisé par le fait qu'il comporte les étapes consistant à :
- réaliser la pièce à peindre par un procédé de moulage de matière thermoplastique dans une cavité de moule,
- laisser refroidir au moins superficiellement la pièce ainsi réalisée, le refroidissement s'accompagnant d'un retrait et s'effectuant avec l'ouverture du moule ayant servi à réaliser la pièce à peindre,
- injecter autour de la pièce une peinture dans une cavité de moule ayant même géométrie que la cavité de moule ayant servi à mouler la matière thermoplastique.

Dans un souci de simplification de l'exposé, le terme "peinture" doit s'entendre ici, dans la suite de la description et dans les revendications comme englobant également les vernis.

Grâce à l'invention, on peut obtenir un aspect de surface nacré ou autre sans avoir à adjoindre une charge à la matière thermoplastique et l'on remédie ainsi aux problèmes de traces laissées par les lignes de flux de matière.

Le retrait de la matière thermoplastique lors de son refroidissement ménage dans la cavité du moule autour de la pièce moulée un espace permettant d'injecter la peinture.

En outre, l'invention permet de remédier aux problèmes de fragilité induits par la présence d'une charge au sein de la matière thermoplastique.

La peinture utilisée peut permettre également d'accroître la résistance aux rayures en étant plus dure que la matière plastique constituant le coeur de la pièce.

On réalise très facilement une pièce ayant l'aspect de surface recherché en utilisant la peinture appropriée.

On peut notamment utiliser une peinture métallisée et obtenir une pièce moulée ayant un aspect métallique sans qu'il soit nécessaire de procéder à une métallisation sous vide.

Le dépôt de la peinture autour de la pièce moulée s'effectue de surcroît grâce à l'invention sans les problèmes d'environnement rencontrés en cas de pulvérisation de peinture.

Dans une mise en oeuvre particulière de l'invention, le refroidissement de la pièce s'effectue en extrayant la pièce du moule.

La pièce moulée peut subir un traitement de surface avant l'injection de la peinture, par exemple un traitement par effet corona destiné à améliorer l'adhérence de la peinture sur la pièce moulée.

Dans une mise en oeuvre particulière du procédé selon l'invention, on utilise un moule entraîné en rotation au moins partiellement relativement à un organe d'amenée de la matière thermoplastique d'une part et à un organe d'amenée de la peinture d'autre part.

Le moule comporte de préférence un premier ensemble de cavités dans lesquelles le moulage de la matière thermoplastique a lieu et un deuxième ensemble de cavités dans lesquelles la peinture est injectée autour de pièces précédemment moulées.

Dans une variante de mise en oeuvre du procédé, après le moulage de la matière thermoplastique, les pièces moulées sont extraites du moule et transportées vers un moule distinct, ce dernier ayant toutefois des cavités dont la géométrie est la même que celle des cavités ayant servi au moulage desdites pièces.

Dans une mise en oeuvre particulière du procédé, on utilise une peinture réticulant sous l'action d'un rayonnement ultraviolet et après l'injection de la peinture, le moule est ouvert et la pièce peinte exposée à un rayonnement ultraviolet.

Dans une variante de mise en oeuvre du procédé, on utilise une peinture réticulant sous l'action de la chaleur et après l'injection de la peinture, cette dernière est chauffée au-dessus de sa température de réticulation.

De préférence, la peinture est injectée dans le moule à une température inférieure ou égale à 100°C, et de préférence encore la peinture est injectée à froid.

On peut encore provoquer la réticulation de la peinture en l'exposant à un agent de réticulation adapté, par exemple un peroxyde.

Les peintures utilisées peuvent être à base polyuréthanne ou époxy et contenir des charges métalliques.

L'invention a encore pour objet une pièce peinte moulée obtenue par la mise en oeuvre du procédé précité.

Cette pièce peut être constituée par une matière thermoplastique revêtue en surface de la couche de peinture déposée par injection dans le moule et dont l'épaisseur est comprise entre 10 et 150 µm, de préférence entre 25 et 50 µm.

Cette pièce peinte moulée constitue par exemple un flacon, un dispositif de bouchage ou un boîtier.

L'invention a encore pour objet un dispositif pour la fabrication de pièces peintes moulées, caractérisé par le fait qu'il comporte :
- un premier ensemble de cavités de moule,
- un deuxième ensemble de cavités de moule, les cavités des premier et deuxième ensembles ayant des géométries identiques,
- un organe pour injecter une matière thermoplastique à l'état fondu dans le premier ensemble de cavités,
- un organe pour injecter une peinture dans le deuxième ensemble de cavités autour des pièces précédemment réalisées au moyen du premier ensemble de cavités de moule.

L'invention permet de réduire les pertes de peinture comparativement à un dépôt par pulvérisation, car la peinture peut être déposée avec l'épaisseur juste nécessaire.

De plus, l'invention permet de fabriquer des pièces peintes moulées avec un faible nombre de manipulations et des moules relativement simples.

L'invention permet encore, lorsque les pièces réalisées sont des flacons ou analogues, de s'affranchir de certains problèmes de compatibilité chimique rencontrés avec les pièces moulées de l'art antérieur contenant des charges non compatibles avec la composition contenue à l'intérieur du flacon.

On peut utiliser grâce à l'invention une matière thermoplastique dépourvue de charges ou de colorants, parfaitement compatible avec la composition contenue à l'intérieur du flacon, tout en ayant l'aspect extérieur recherché, les pigments ou colorants de la peinture utilisée ne risquant pas de venir au contact de la composition précitée.

L'invention sera mieux comprise à la lecture de la description détaillée qui va suivre, d'un exemple de mise en oeuvre non limitatif, et à l'examen du dessin annexé sur lequel :
- la figure 1 est une vue schématique en perspective d'un dispositif pour la fabrication de pièces peintes moulées conformément au procédé selon l'invention, moule ouvert,
- les figures 2 à 6 sont des vues schématiques de face du moule, illustrant différentes étapes de la fabrication des pièces peintes moulées,
- les figures 7 à 10 sont des vues en coupe d'une cavité de moule illustrant différentes étapes de la réalisation d'une pièce peinte moulée.

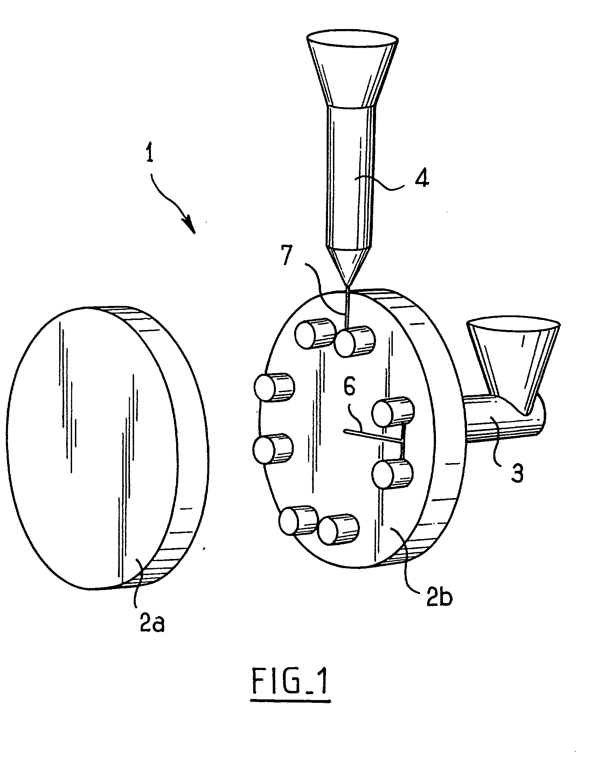

Le dispositif 1 représenté sur la figure 1 comporte un moule rotatif en deux parties 2a, 2b, un organe 3 d'amenée de la matière thermoplastique à mouler, et un organe 4 d'amenée de la peinture.

Dans l'exemple de réalisation considéré, le moule 2a, 2b est destiné à la fabrication de capots de fermeture pour récipients aérosols.

Des canaux 6 sont réalisés dans le moule 2a, 2b pour conduire lorsque le moule est fermé la matière thermoplastique à l'état fondu depuis l'organe 3 vers des cavités 5 de moule dans lesquelles le moulage des pièces doit avoir lieu.

Ces cavités 5 qui ont des dimensions identiques sont définies par des empreintes réalisées sur les parties 2a et 2b.

Dans l'exemple considéré, chaque cavité 5 est définie par l'espace existant entre un logement 8 de la partie 2a et un bossage 9 de la partie 2b, engagé à l'intérieur de ce logement 8.

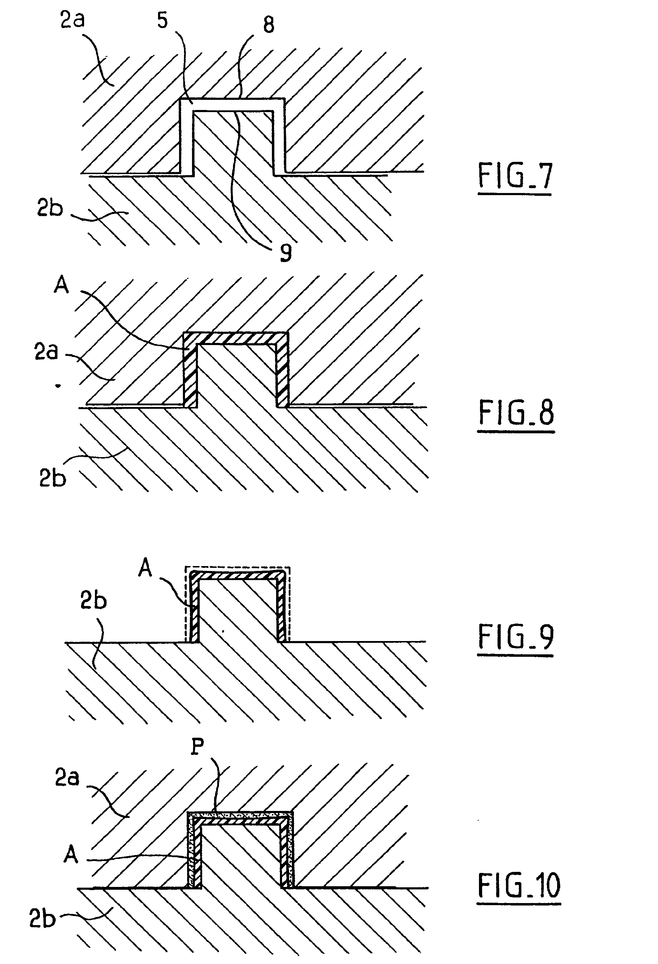

On a représenté isolément une cavité 5 sur la figure 7.

La partie 2b du moule comporte par ailleurs des canaux 7 pour conduire lorsque le moule est fermé la peinture à l'état liquide depuis l'organe 4 vers chaque cavité 5 autour d'une pièce précédemment moulée.

On n'a représenté sur la figure 1 que partiellement et schématiquement les canaux 6 et 7 d'amenée et de répartition de la matière thermoplastique et de la peinture, dans un souci de clarté du dessin.

Dans l'exemple considéré, le moule 2a, 2b comporte au total huit cavités 5 identiques qui sont groupées deux par deux de manière à former quatre groupes.

On passe d'un groupe à un autre par une rotation d'un quart de tour du moule dans le sens contraire des aiguilles d'une montre.

La partie 2a du moule est fixe dans l'exemple décrit.

De préférence, comme illustré sur la figure 1, l'organe 3 d'amenée de la matière thermoplastique communique avec les canaux 6 depuis une région centrale du moule tandis que l'organe 4 d'amenée de la peinture communique avec les canaux 7 depuis la périphérie du moule.

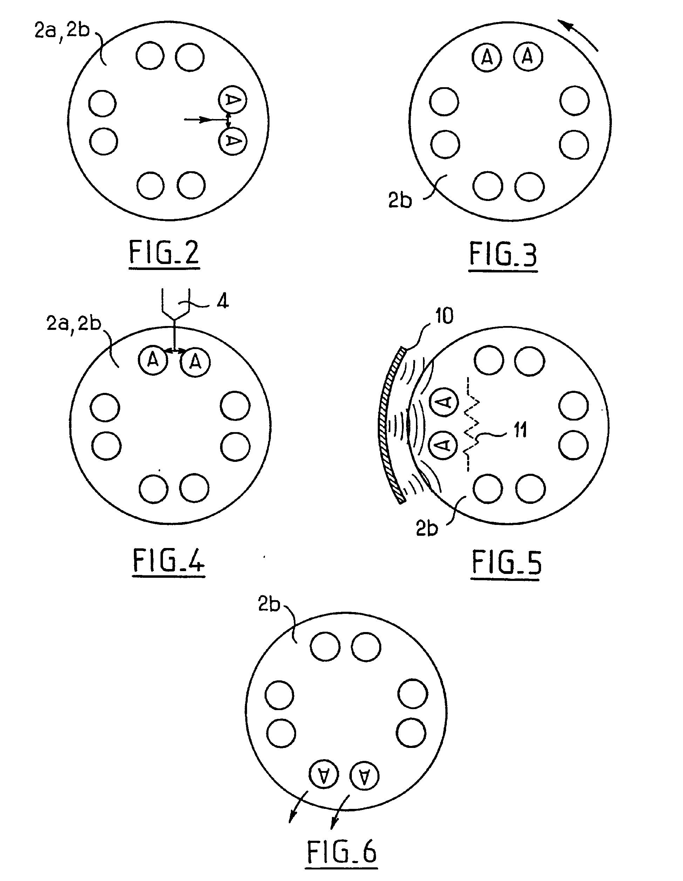

On va maintenant décrire en référence aux figures 2 à 10 les différentes étapes de la réalisation d'une pièce peinte moulée.

On commence par injecter la matière thermoplastique dans le groupe de cavités qui se trouve à droite sur la figure 2, pour réaliser des pièces moulées A.

La matière thermoplastique remplit alors entièrement les cavités 5 correspondantes, comme illustré sur la figure 8.

Après l'injection de la matière thermoplastique pour réaliser les pièces A, le moule est ouvert puis entraîné en rotation d'un quart de tour comme illustré sur la figure 3.

Les pièces moulées A se retrouvent alors en haut sur la figure 4.

Leur refroidissement s'accompagne d'un retrait.

L'ouverture du moule permet d'assurer que la surface extérieure de la pièce destinée à être peinte n'adhère plus au moule, ce qui pourrait gêner sinon la répartition ultérieure de la peinture autour de la pièce.

On a illustré sur la figure 9 par des pointillés la forme initiale des pièces A avant refroidissement.

De préférence, le refroidissement des pièces est suffisant pour que le coeur de la pièce soit dur et le retrait maximum ou presque.

L'ouverture du moule permet d'effectuer un traitement par effet corona par exemple, afin d'améliorer l'adhérence de la peinture.

Le moule est ensuite refermé et la peinture P est injectée autour des pièces moulées A, ayant subi le retrait lié au refroidissement de la matière thermoplastique, comme illustré sur la figure 10.

La peinture P utilisée dans l'exemple décrit réticule sous l'action d'un rayonnement ultraviolet produit par un générateur d'ultraviolets 10.

Le moule est ouvert après l'injection de la peinture dans les cavités 5 puis tourne d'un quart de tour et les pièces peintes A qui sont à gauche sur la figure 5 sont exposées à un rayonnement ultraviolet provocant la réticulation de la peinture.

En variante, si l'on utilise une peinture réticulant sous l'action de la chaleur, les pièces A sont portées après l'injection de la peinture à une température supérieure à sa température de réticulation, au moyen par exemple d'une résistance électrique 11 représentée schématiquement en pointillés sur la figure 5 ou d'un fluide chaud circulant dans le moule.

Après réticulation de la peinture, les pièces A sont éjectées au quart de tour suivant du moule, comme illustré par les flèches sur la figure 6.

De préférence, on utilise un moule rotatif comme précédemment décrit de manière à réaliser simultanément les opérations d'injection de la matière thermoplastique et d'injection de la peinture.

En d'autres termes, on moule des pièces dans un premier groupe de cavités pendant que l'on en peint d'autres dans un deuxième groupe de cavités.

Bien entendu, l'invention n'est pas limitée aux exemples qui viennent d'être décrits.

On peut notamment utiliser à la place d'un moule rotatif un premier moule dans les cavités duquel la matière thermoplastique est injectée, et un deuxième moule dans lequel l'injection de la peinture a lieu, les pièces moulées et non peintes étant transportées d'un moule à l'autre par tout moyen approprié.

## Revendications

1. Procédé pour réaliser une pièce peinte en matière thermoplastique moulée, **caractérisé par le fait qu'**il comporte les étapes consistant à :
- réaliser la pièce à peindre par un procédé de moulage de matière thermoplastique dans une cavité (5) de moule (2a,2b),
- laisser refroidir au moins superficiellement la pièce ainsi réalisée, le refroidissement s'accompagnant d'un retrait et s'effectuant avec l'ouverture du moule (2a,2b) ayant servi à réaliser la pièce à peindre,
- injecter autour de la pièce (A) une peinture (P) dans une cavité (5) de moule ayant même géométrie que la cavité de moule ayant servi à mouler la matière thermoplastique.

2. Procédé selon la revendication 1, **caractérisé par le fait que** le refroidissement de la pièce s'effectue en extrayant la pièce du moule.

3. Procédé selon la revendication 1 ou 2, **caractérisé par le fait que** la pièce moulée subit un traitement de surface avant l'injection de la peinture.

4. Procédé selon l'une quelconque des revendications 1 à 3, **caractérisé par le fait que** le moule (2a, 2b) est entraîné en rotation au moins partiellement relativement à un organe (3) d'amenée de la matière thermoplastique d'une part et à un organe (4) d'amenée de la peinture (P) d'autre part.

5. Procédé selon l'une quelconque des revendications 1 à 4, **caractérisé par le fait que** le moule comporte un premier ensemble de cavités dans lesquelles le moulage de la matière thermoplastique a lieu et un deuxième ensemble de cavités dans lesquelles la peinture est injectée autour de pièces précédemment moulées.

6. Procédé selon l'une quelconque des revendications 1 à 4, **caractérisé par le fait qu'**après le moulage de la matière thermoplastique, les pièces moulées sont extraites du moule et transportées vers un moule distinct.

7. Procédé selon l'une quelconque des revendications précédentes, **caractérisé par le fait que** l'on utilise une peinture réticulant sous l'action d'un rayonnement ultraviolet et **par le fait qu'**après l'injection de la peinture, le moule est ouvert et la pièce peinte exposée à un rayonnement ultraviolet.

8. Procédé selon l'une quelconque des revendications 1 à 6, **caractérisé par le fait que** l'on utilise une peinture réticulant sous l'action de la chaleur et **par le fait qu'**après l'injection de la peinture, cette dernière est chauffée à une température supérieure à sa température de réticulation.

9. Procédé selon l'une quelconque des revendications précédentes, **caractérisé par le fait que** la peinture est injectée à une température inférieure ou égale à 100°C, et de préférence la peinture est injectée à froid.

10. Dispositif pour la fabrication d'une pièce peinte moulée, **caractérisé par le fait qu'**il comporte :
- un premier ensemble de cavités de moule,
- un deuxième ensemble de cavités de moule, les cavités desdits premier et deuxième ensembles ayant des géométries identiques,
- un premier organe (3) pour injecter une matière thermoplastique à l'état fondu dans le premier ensemble de cavités de moule, et
- un deuxième organe (4) pour injecter une peinture dans le deuxième ensemble de cavités de moule, autour des pièces précédemment réalisées au moyen du premier ensemble de cavités de moule.

11. Dispositif selon la revendication 10, **caractérisé par le fait qu'**il comporte un générateur d'ultraviolets (10) pour exposer les pièces peintes à un rayonnement ultraviolet.

12. Dispositif selon l'une quelconque des revendications 10 et 11, **caractérisé par le fait qu'**il comporte des moyens (11) pour chauffer les pièces peintes moulées.

13. Dispositif selon l'une quelconque des revendications 10 à 12, **caractérisé par le fait qu'**il comporte un moule rotatif permettant de réaliser simultanément les opérations d'injection de la matière plastique dans le premier ensemble de cavités et d'injection de la peinture dans le second ensemble de cavités.

## Claims

1. A method of making a painted part out of molded thermoplastic material, the method being **characterized by** the fact that it comprises the steps consisting in:
· making the part to be painted by a method of molding thermoplastic material in the cavity (5) of a mold (2a, 2b);
· allowing the part made in this way to cool at least on the surface, cooling being accompanied by shrinkage, and being performed by opening the mold (2a, 2b) that was used to make the part that is to be painted; and
· injecting paint (P) around the part (A) in a cavity (5) of a mold having the same shape as the mold cavity that was used for molding the thermoplastic material.

2. A method according to claim 1, **characterized by** the fact that the part is cooled by being extracted from the mold.

3. A method according to claim 1 or 2, **characterized by** the fact that the molded part is subjected to surface treatment prior to injecting the paint.

4. A method according to any one of claims 1 to 3, **characterized by** the fact that the mold (2a, 2b) is rotated at least through part of a turn relative both to a feed member (3) for feeding thermoplastic material to a feed member (4) for feeding paint (P).

5. A method according to any one of claims 1 to 4, **characterized by** the fact that the mold has a first set of cavities in which molding of the thermoplastic material takes place, and a second set of cavities in which the paint is injected around the previously-molded part.

6. A method according to any one of claims 1 to 4, **characterized by** the fact that after the thermoplastic material has been molded, the molded parts are extracted from the mold and transferred to a different mold.

7. A method according to any preceding claim, **characterized by** the fact that a paint is used that is cured under the action of ultraviolet radiation, and by the fact that after the paint has been injected, the mold is opened and the painted part is exposed to ultraviolet radiation.

8. A method according to any one of claims 1 to 6, **characterized by** the fact that a paint is used that is cured under the action of heat, and by the fact that after the paint has been injected, it is heated to a temperature higher than its curing temperature.

9. A method according to any preceding claim, **characterized by** the fact that the paint is injected at a temperature less than or equal to 100°C, and preferably the paint is injected cold.

10. Apparatus for manufacturing a painted molded part, the apparatus being **characterized by** the fact that it comprises:
· a first set of mold cavities;
· a second set of mold cavities, the cavities of said first and second sets being identical in shape;
· a first injector member (3) for injecting thermoplastic material in the molten state into the first set of mold cavities; and
· a second injector member (4) for injecting paint into the second set of mold cavities around parts previously made by means of the first set of mold cavities.

11. Apparatus according to claim 10, **characterized by** the fact that it includes an ultraviolet generator (10) for exposing the painted parts to ultraviolet radiation.

12. Apparatus according to claim 10 or 11, **characterized by** the fact that it includes heater means (11) for heating the painted molded parts.

13. Apparatus according to any one of claims 10 to 12, **characterized by** the fact that it includes a rotary mold enabling the operations of injecting plastics material into the first set of cavities and of injecting paint into the second set of cavities to be performed simultaneously.

## Patentansprüche

1. Verfahren zur Herstellung eines farbbeschichteten Teils aus geformtem Thermoplast, **dadurch gekennzeichnet, dass** es die Schritte umfasst, die darin bestehen, dass
- das zu beschichtende Teil durch ein Verfahren zum Formen von Thermoplast in einem Hohlraum (5) einer Form (2a, 2b) hergestellt wird,
- das auf diese Weise hergestellte Teil mindestens oberflächlich abkühlen gelassen wird, wobei die Abkühlung von einer Schrumpfung begleitet ist und mit der Öffnung der Form (2a, 2b) stattfindet, die zur Herstellung des zu beschichtenden Teils gedient hat,
- um das Teil (A) herum eine Farbbeschichtung (P) in einen Formhohlraum (5) eingespritzt wird, der dieselbe Geometrie wie der Formhohlraum hat, der zum Formen des Thermoplasts gedient hat.

2. Verfahren nach Anspruch 1, **dadurch gekennzeichnet, dass** die Abkühlung des Teils stattfindet, indem das Teil aus der Form genommen wird.

3. Verfahren nach Anspruch 1 oder 2, **dadurch gekennzeichnet, dass** das geformte Teil vor dem Einspritzen der Beschichtungsfarbe einer Oberflächenbehandlung unterzogen wird.

4. Verfahren nach einem der Ansprüche 1 bis 3, **dadurch gekennzeichnet, dass** die Form (2a, 2b) mindestens teilweise bezüglich einerseits eines Organs (3) zur Zufuhr des Thermoplasts und andererseits eines Organs (4) zur Zufuhr der Beschichtungsfarbe (P) in Drehung versetzt wird.

5. Verfahren nach einem der Ansprüche 1 bis 4, **dadurch gekennzeichnet, dass** die Form eine erste Einheit von Hohlräumen umfasst, in denen das Formen des Thermoplasts stattfindet, und eine zweite Einheit von Hohlräumen, in denen die Beschichtungsfarbe um zuvor geformte Teile herum eingespritzt wird.

6. Verfahren nach einem der Ansprüche 1 bis 4, **dadurch gekennzeichnet, dass** nach dem Formen des Thermoplasts die geformten Teile aus der Form genommen werden und zu einer anderen Form befördert werden.

7. Verfahren nach einem der vorhergehenden Ansprüche, **dadurch gekennzeichnet, dass** man eine sich unter der Wirkung einer ultravioletten Strahlung vernetzende Beschichtungsfarbe verwendet und dass die Form nach der Einspritzung der Beschichtungsfarbe geöffnet wird und das Teil einer ultravioletten Strahlung ausgesetzt wird.

8. Verfahren nach einem der Ansprüche 1 bis 6, **dadurch gekennzeichnet, dass** man eine sich unter der Wirkung der Wärme vemetzende Beschichtungsfarbe verwendet und dass die Beschichtungsfarbe nach ihrem Einspritzen auf eine Temperatur erhitzt wird, die höher als ihre Verrietzungstemperatur ist.

9. Verfahren nach einem der vorhergehenden Ansprüche, **dadurch gekennzeichnet, dass** die Beschichtungsfarbe bei einer Temperatur von weniger als oder gleich 100°C eingespritzt wird und die Beschichtungsfarbe vorzugsweise kalt eingespritzt wird.

10. Vorrichtung zur Herstellung eines farbbeschichteten geformten Teils, **dadurch gekennzeichnet, dass** sie umfasst:
- eine erste Einheit von Formhohlräumen,
- eine zweite Einheit von Formhohlräumen, wobei die Hohlräume der ersten und der zweiten Einheit identische Geometrien besitzen,
- ein erstes Organ (3) zum Einspritzen eines Thermoplasts im geschmolzenen Zustand in die erste Einheit von Formhohlräumen und
- ein zweites Organ (4) zum Einspritzen einer Beschichtungsfarbe in die zweite Einheit von Formhohlräumen um die zuvor mit Hilfe der ersten Einheit von Formhohlräumen hergestellte Teile herum.

11. Vorrichtung nach Anspruch 10, **dadurch gekennzeichnet, dass** sie einen UV-Generator (10) umfasst, um die farbbeschichteten Teile einer ultravioletten Strahlung auszusetzen.

12. Vorrichtung nach einem der Ansprüche 10 und 11, **dadurch gekennzeichnet, dass** sie Mittel (11) zum Erhitzen der farbbeschichteten geformten Teile umfasst.

13. Vorrichtung nach einem der Ansprüche 10 bis 12, **dadurch gekennzeichnet, dass** sie eine rotierende Form umfasst, die die gleichzeitige Ausführung der Arbeitsgänge der Einspritzung des Kunststoffs in die erste Einheit von Hohlräumen und des Einspritzens von Beschichtungsfarbe in die zweite Einheit von Hohlräumen gestattet.
